# EUROPÄISCHE PATENTSCHRIFT

(11) **EP 1 029 731 B1**
(45) Veröffentlichungstag und Bekanntmachung des Hinweises auf die Patenterteilung: **21.06.2006**
(21) Anmeldenummer: 00101218.6
(22) Anmeldetag: 21.01.2000
(51) Int. Cl.: B60K 37/02

(54) **Anzeigeinstrument für Kraftfahrzeuge**
Display instrument for motor vehicles
Dispositif indicateur pour automobiles

(30) Priorität: 17.02.1999 DE 19906530
(43) Veröffentlichungstag der Anmeldung: 23.08.2000
(73) Patentinhaber: Volkswagen Aktiengesellschaft, 38436 Wolfsburg (DE)
(72) Erfinder: Piccottini, Peter, 9500 Villach (AT)

(56) Entgegenhaltungen:
- EP-A- 0 846 588
- DE-A- 4 321 146
- DE-A- 19 537 666
- DE-U- 29 722 676

## Beschreibung

Die Erfindung betrifft ein Anzeigeinstrument für Kraftfahrzeuge, insbesondere zum Einbau in der Armaturentafel bzw. in das Kombi-Anzeigeinstrument mit randseitig verlaufender Bezifferung sowie einem Anzeigedisplay im mittleren Bereich des Anzeigeninstrumentes und einem Zeigerelement, gemäß Oberbegriff des Patentanspruches 1.

Anzeigeinstrumente für den Kraftfahrzeugbereich sind vielfach bekannt. Die Anforderungen an Anzeigeinstrumente für Kraftfahrzeuge sind, daß dieselben gut ablesbar, im übrigen blendfrei und so angeordnet sein müssen, daß eine sichere Einsichtnahme aller Anzeigeelemente aus der Sollposition des Fahrzeugführers möglich ist.

Die Instrumentierung muß übersichtlich gestaltet sein und muß im Bereich der üblicherweise als Kombi-Gerät ausgeführten Keminstrumentierung, meistenteils hinter dem Lenkrad angeordnet, auch informationsmäßig gut ausgestattet sein. Dabei darf das Anzeigeinstrument nicht überladen wirken, muß jedoch die wichtigsten Fahrdaten und Betriebsinformationen des Fahrzeuges selbsterklärend und sicher anzeigen.

Es sind zu diesem Zweck Analoginstrumente bekannt, wobei insbesondere das Tachometer sowie der Drehzahlmesser als Analoginstrumente ausgeführt werden. Analoginstrument heißt hierbei lediglich, daß die Anzeige als solches analog vorgenommen wird. Das heißt, auf einem Anzeigefeld sind Ziffern, beispielsweise in kreisrunder Darstellung randseitig verteilt angeordnet. Ein entsprechender Zeiger ist mittig im Anzeigeinstrument untergebracht und bei entsprechender Beaufschlagung, beispielsweise beim Tachometer abhängig von der Raddrehzahl, wird der Zeiger dann bewegt. Die Anzeige selbst muß dabei geeicht werden, um eine zutreffende und fehlerarme Anzeige zu liefern.

Die Beaufschlagung des Zeigerelementes erfolgt in den meisten Fällen und im heutigen Stand der Technik nicht mehr durch eine sog. Tachometerwelle, also mechanisch, sondern durch eine elektrische Beaufschlagung des Zeigers. Das heißt, die Winkelgeschwindigkeit des Rades wird auf irgendeine Weise gemessen und ein entsprechend proportionales Stellsignal in Form einer Spannung oder eines Stromes wird sodann auf das elektrische Instrument zur Zeigerbetätigung übertragen. Natürlich muß in diesem Falle, wie oben bereits gesagt, eine Eichung erfolgen.

Es sind neben der Verwendung üblicher analoger Anzeigeinstrumente auch voll digitalisierte Anzeigen für Kraftfahrzeuge bekannt, bei denen auch Geschwindigkeit und Drehzahl auf Displays angezeigt werden. Hierbei gibt es die Möglichkeit beispielsweise die Geschwindigkeit als Ziffer in der Einheit km/h anzuzeigen. Dies ist jedoch in vielen Fällen unerwünscht, weil der Fahrzeugführer zumeist nicht nur die Anzeige des Absolutwertes wünscht, sondern auch den Absolutwert im Verhältnis zur Gesamtanzeige sehen möchte. Dies verschafft im übrigen auch in psychologischer Hinsicht eine bessere Einschätzung beispielsweise der Geschwindigkeit, wenn diese in Relation zum gesamten Wertebereich ablesbar ist.

So ist aus der DE 297 22 676 U1 das auch die Merkmale des Oberbegriffs des 1. Anspruchs beinhaltet bekannt, ein Zeigerinstrument dahingehend auszugestalten, daß zunächst randseitig eine Bezifferung der Anzeige vorgenommen wird und daß im mittleren Bereich des Anzeigeinstrumentes ein Anzeigedisplay vorgesehen ist. Dieses Display simuliert dabei das Zeigerelement. Das heißt, das Zeigerelement ist kein analoges, letztendlich mechanisch oder elektromechanisch bewegtes Element mehr, sondern ein virtuelles Zeigerelement auf dem Display. Dieses läuft dann, beispielsweise bei Verwendung als Tachometer an der randseitigen Bezifferung, abhängig von der jeweils aktuellen Geschwindigkeit entlang und zeigt dieselbe an. Das mittlere Displayfeld ist frei zur Darstellung von Verkehrsinformationen.

Aus der EP 0 759 372 A1 ist eine Anzeige mit Zeiger bekannt, bei welcher der Zeiger als Laserstrahl auf eine diffuse Oberfläche projiziert wird. Diese Anordnung ist unter Umständen wegen der Verwendung des Laserstrahles nicht unproblematisch, insbesondere dann, wenn es zu einer direkten Blendwirkung des Fahrzeugführers kommen könnte.

Der erstgenannte Stand der Technik verwendet zwar ein mittig im Feld des Anzeigeinstrumentes angeordnetes Display, in welchem jedoch auf alle Fälle das Zeigerelement stets angezeigt wird. Dies führt natürlich zu einer Einschränkung der nutzbaren Zeigerfläche oder andererseits zur Überdeckung des anderweitig genutzten Displaybereiches.

Die DE 43 21 146 A1 offenbart eine Anzeigeeinheit mit einer zentralen Anzeige und einem Zeigerinstrument, wobei das Zeigerinstrument einen Antrieb, der in Ableserichtung hinter der Anzeige angeordnet ist, eine die Anzeige umgebende Skalenscheibe und einen mittels des Antriebes verschwenkbaren Zeiger aufweist, wobei der dem Antrieb zugeordnete Bereich des Zeigers hinter der Anzeige und der der Skalenscheibe zugeordnete Bereich des Zeigers benachbart zur Skalenscheibe angeordnet sind und wobei die Skalenscheibe in der Ebene der Anzeigefläche der Anzeige oder vor dieser Ebene angeordnet ist.

Die DE 195 37 666 C2 offenbart ein Zeigerinstrument mit einer als Flüssigkristallanzeige ausgebildeten, durchgangsbohnrngslvsen Frontplatte, die eine oder mehrere Skalen und/oder Anzeigen aufweist, wobei auf deren einem Beobachter zugewandten Seite ein um eine etwa senkrecht zur Frontplattenebene gerichtete Drehachse bewegbar antreibbarer Zeiger und auf deren dem Beobachter abgewandten Seite ein Drehantrieb des Zeigers angeordnet ist, wobei der Zeiger drehbar auf der dem Beobachter zugewandten Seite der Frontplatte gelagert ist, wobei der Drehantrieb mindestens ein ein Magnetfeld erzeugendes Mitteil und der Zeiger ein magnetisches Bauteil aufweist, das durch das durch die Flüssigkristallzelle hindurch wirkende, Zeiger und Drehantrieb direkt magnetisch miteinander kuppelnde Magnetfeld vom Drehantrieb um die Drehachse bewegbar antreibbar ist.

Der Erfindung liegt die Aufgabe zugrunde, ein Anzeigeinstrument für Kraftfahrzeuge dahingehend zu verbessern, daß die an sich vorteilhafte mittige Anordnung eines Displays durch keine überdeckenden Anzeigeelemente gestört oder überdeckt wird.

Die gestellte Aufgabe wird bei einem Anzeigeinstrument der gattungsgemäßen Art erfindungsgemäß durch die kennzeichnenden Merkmale des Patentanspruches 1 gelöst.

Vorteilhafte Ausgestaltungen des erfindungsgemäßen Anzeigeinstrumentes sind in den abhängigen Ansprüchen angegeben.

Kern der Erfindung besteht darin, daß das Zeigerelement nur noch, d. h. lediglich als Zeigerabschnitt im randseitig verlaufenden bezifferten Bereich bewegbar ist und zwar derart, daß es zu keiner, d.h. auch zu keiner partiellen Überdeckung mit dem Anzeigedisplay kommt. Das heißt, das Zeigerelement läuft außerhalb des Anzeigedisplays und stört somit dasselbe und die darin generierte Anzeige nicht.

Demzufolge ist in weiterer vorteilhafter Ausgestaltung das gesamte Anzeigedisplay in seiner vollen Erstreckung frei programmierbar.

In weiterer vorteilhafter Ausgestaltung der Erfindung ist das erfindungsgemäße Anzeigeinstrument als Rundinstrument ausgestaltet.

Weiterhin ist ausgestaltend vorgesehen, daß der randseitig verlaufende bezifferte Bereich durch ein kreisringförmiges zweites Displayelement oder Displaysegment realisiert ist.

Dabei kann sowohl die Bezifferung nach Art eines Analoginstrumentes vorgenommen werden, als auch der entsprechend bewegbare Zeigerabschnitt im zweiten Displaysegment, also außerhalb des zentralen Anzeigedisplays simuliert werden.

Bei Ausschalten der frei programmierbaren Anzeige auf dem zentralen inneren Display wird dabei automatisch der restliche Zeigerabschnitt mitsamt dem Drehelement des Zeigers auf dem Display simuliert. Das heißt, bei normalem Funktionsbetrieb des Displays ist lediglich ein Zeigerabschnitt außerhalb des zentralen Anzeigedisplays generiert. Ist jedoch das entsprechend zentrale Display nicht mehr im Funktionsbetrieb, so wechselt es automatisch auf eine simulierte Anzeige des restlichen Zeigerabschnittes mitsamt dem Drehelement des Zeigers. Diese Darstellung bei ansonsten funktionsmäßig ausgeschalteter Displayzuweisung wird dabei so generiert, daß beispielsweise abhängig von der Geschwindigkeit natürlich auch dieses Zeigerelement in seiner Bewegung simuliert wird.

In weiterer vorteilhafter Ausgestaltung der Erfindung ist das zentrale Anzeigedisplay farbig ausgestaltet.

In letzter vorteilhafter Ausgestaltung der Erfindung werden in dem zentralen Anzeigedisplay Verkehrszeichen und/oder Verkehrsinformationen, die ggf. geschwindigkeitsrelevant sind, angezeigt. Dies kann beispielsweise die Anzeige des Verkehrszeichens einer entsprechend geschwindigkeitsreduzierten Zone sein, das kann eine Geschwindigkeitsbegrenzung auf der Autobahn sein, das können jedoch auch betriebsrelevante Daten sein, wie sie beispielsweise beim Einsatz eines solchen erfindungsgemäßen Anzeigeinstrumentes als Drehzahlmesser relevant sein könnten. Diese Betriebsdaten können dann beispielsweise sein höchstzulässige Drehzahl, Betriebszustand des Fahrzeuges bzw. des Motors und in beiden Anzeigefällen auch die Fahrbahnbeschaffenheit.

Somit ist das Anzeigeinstrument universell einsetzbar und hat dennoch die Optik eines von den meisten Fahrzeugführern gewünschten analogen Anzeigeinstrumentes mitsamt aller darin enthaltenen auch analogen oder analogäquivalenten Anzeigedarstellungen. Darüber hinaus wird der zentrale Zeigerabschnitt aus dem zentralen Anzeigebereich des Displays bzw. des Anzeigedisplays bei Betrieb desselben ausgeblendet, so daß es zu keiner Überschattung oder Überdeckung oder Minderung der Anzeigedisplayfläche kommt.

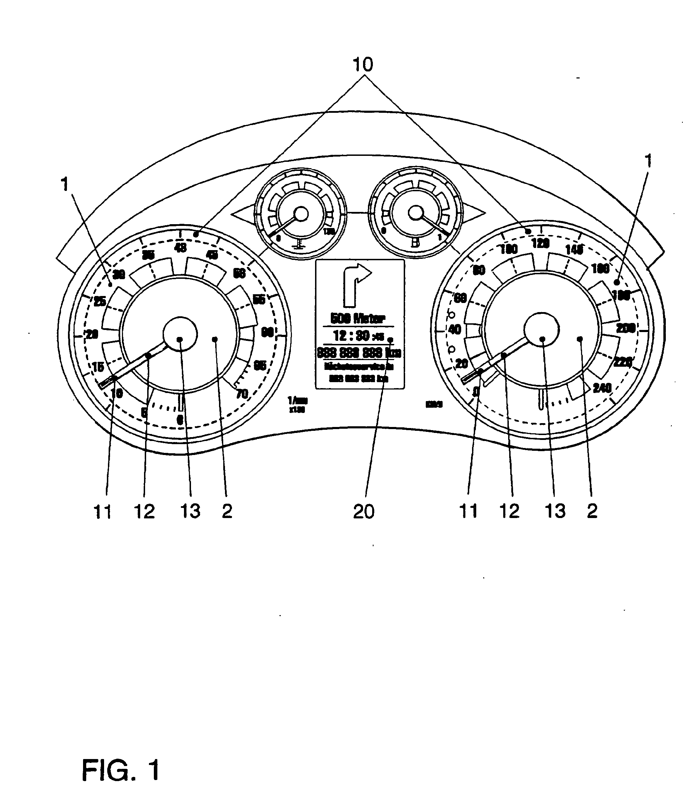

Die Erfindung ist in der Zeichnung dargestellt und nachfolgend näher beschrieben.

Die Abbildung zeigt eine Gesamtdarstellung eines Anzeigekombi-Instrumentes, wie es in der Armaturentafel hinter dem Lenkrad des Fahrzeuges eingesetzt wird. Das sog. Kombi-Instrument enthält dabei mehrere einzelne Anzeigeinstrumente 10, wie hier Drehzahlmesser, Tachometer sowie Tankanzeige und Kühlwassertemperatur. Darüber hinausgehend ist auch ebenfalls ein weiteres unabhängiges Display 20 für die Darstellung beispielsweise des Navigationssystemes vorgesehen. Die Anzeigeinstrumente 10 sind als solches in analoger Optik dargestellt und so entweder teilweise analog und teilweise als Display oder auch insgesamt als segmentierte Displaydarstellung gewählt. Wichtig ist dabei, daß auf einem äußeren Kreisring die entsprechenden Zahlenwerte sowie entsprechende Bereichsmarkierungen als bezifferter Bereich 1 dargestellt sind. In diesem randseitigen Bereich verläuft dann ebenfalls erfindungsgemäß das Zeigerelement 11 als lediglich nur noch dargestellter Zeigerabschnitt. Der Zentralbereich innerhalb des Anzeigeinstrumentes 2 ist dabei als Anzeigedisplay 2 ausgestaltet. Der Zeigerabschnitt 11 ist dabei so in den bezifferten randseitig verlaufenden Bereich 1 integriert, daß es zu keiner Überdeckung des inneren Anzeigedisplays 2 kommt. Das heißt, die Nachteile, wie sie im Stand der Technik oftmals vorzufinden sind, daß nämlich selbst bei Verwendung eines solchen Anzeigedisplays dasselbe aber von dem Zeiger überschattet oder abgedeckt oder flächenmäßig begrenzt wird, entfällt hier vollständig.

Wird nun das Anzeigeinstrument 10 in seinem Anzeigedisplay 2 entsprechend beaufschlagt, also befindet es sich in Funktionsbetrieb, dann wird auch lediglich nur der Zeigerabschnitt 11 im hier dargestellten bezifferten Randbereich 1 generiert. Dabei kann der Randbereich entweder analog dargestellt sein, wobei der Zeigerabschnitt 11 entweder digital oder analog darstellbar ist oder aber der Randbereich 1 ist ebenfalls ein zweites ringförmiges Display mit entsprechender Generierung der feststehenden und der beweglichen Elemente, wie der Zeigerabschnitt 11.

Die Displayanzeige 2 im Zentrum des Anzeigeinstrumentes 10 ist dabei jeweils eine frei programmierbare Anzeige, die sich automatisch in einen bestimmten Anzeigestatus zurückschaltet, wenn es nicht mehr betriebs- oder funktionsgemäß betrieben wird. Das heißt, wenn auf dem Anzeigedisplay 2 keine Anzeige von Verkehrszeichen oder übrigen Fahr- oder Fahrzeugdaten mehr erfolgt, dann wechselt der Anzeigebetrieb des Anzeigedisplays 2 automatisch auf die Darstellung des restlichen Zeigerabschnittes 12 mitsamt dem Drehelement 13 des Zeigers, der sodann auf dem mittleren zentralen Anzeigedisplay simuliert wird. Dadurch entsteht die Optik eines üblichen analogen Anzeigeinstrumentes, stört jedoch das Anzeigedisplay im Anzeigbetriebsfall nicht, weil die übrige Zeigerdarstellung solange ausgeblendet ist.

Die Darstellung kann farbig hinterlegt und somit optisch hervorgehoben werden. Betriebs- oder geschwindigkeitsrelevante Daten, wie Verkehrszeichen, Betriebszustand des Fahrzeuges und dgl. mehr auch die Fahrbahnbeschaffenheit, können hierbei angezeigt werden.

## Patentansprüche

1. Anzeigeinstrument für Kraftfahrzeuge, insbesondere zum Einbau in der Armaturentafel bzw. in das Kombi-Anzeigeinstrument , mit randseitig verlaufender Bezifferung, sowie einem Anzeigedisplay (2) im mittleren Bereich des Anzeigeinstrumentes, und einem Zeigerelement, **dadurch gekennzeichnet, daß** das Zeigerelement lediglich als Zeigerabschnitt (11) im randseitig verlaufenden bezifferten Bereich (1) bewegbar ist, derart, daß es bei Funktionsbetrieb des Anzeigedisplays (2) keine Überdeckung mit demselben aufweist, wobei bei Ausschalten einer frei programmierbaren Anzeige auf dem Anzeigedisplay (2) automatisch der restliche Zeigerabschnitt (12) mitsamt dem Drehelement (13) des Zeigers auf dem Anzeigedisplay (2) simuliert darstellbar ist.

2. Anzeigeinstrument nach Anspruch 1, **dadurch gekennzeichnet, daß** das Anzeigedisplay (2) frei programmierbar ist.

3. Anzeigeinstrument nach Anspruch 1 oder 2, **dadurch gekennzeichnet, daß** das Anzeigeinstrument (10) ein Rundinstrument ist.

4. Anzeigeinstrument nach Anspruch 3, **dadurch gekennzeichnet, daß** der randseitig verlaufende, bezifferte Bereich (1) durch ein kreisringförmiges zweites Displayelement oder Displaysegment realisiert ist.

5. Anzeigeinstrument nach Anspruch 4, **dadurch gekennzeichnet, daß** sowohl die Bezifferung nach Art eines Analoginstrumentes als auch der entsprechend bewegbare Zeigerabschnitt (11) im zweiten Displaysegment simuliert wird.

6. Anzeigeinstrument nach einem der vorhergehenden Ansprüche, **dadurch gekennzeichnet, daß** die Darstellung auf dem Anzeigedisplay (2) farbig generierbar ist.

7. Anzeigeinstrument nach einem der vorhergehenden Ansprüche, **dadurch gekennzeichnet, daß** auf dem Anzeigedisplay (2) fahrbetriebsrelevante Daten, wie aktuelle Verkehrszeichen, oder betriebsrelevante bzw. geschwindigkeitsrelevante Daten anzeigbar sind.

## Claims

1. Display instrument for motor vehicles, in particular for installation in the dashboard or in the combined display instrument, having numbering running at the edge, as well as an indicating display (2) in the middle region of the display instrument, and a pointer element, **characterized in that** the pointer element can be moved only as a pointer segment (11) in the numbered region (1) running at the edge in such a way that it does not overlap the indicating display (2) when the latter is in functional mode, it being possible, upon switching off a freely programmable display on the indicating display (2), for the remaining pointer segment (12) together with the rotary element (13) of the pointer to be displayed automatically in a simulated fashion on the indicating display (2).

2. Display instrument according to Claim 1, **characterized in that** the indicating display (2) is freely programmable.

3. Display, instrument according to Claim 1 or 2, **characterized in that** the display instrument (10) is a round instrument.

4. Display instrument according to Claim 3, **characterized in that** the numbered region (1) running at the edge is implemented by means of an annular second display element or display segment.

5. Display instrument according to Claim 4, **characterized** both in that the numbering is performed in the manner of an analogue instrument, and in that the correspondingly moveable pointer segment (11) is simulated in the second display segment.

6. Display instrument according to one of the preceding claims, **characterized in that** the representation on the indicating display (2) can be generated in colour.

7. Display instrument according to one of the preceding claims, **characterized in that** data relevant to driving operations, such as current traffic signs, or operationally relevant and/or speed-related data can be indicated on the indicating display (2).

## Revendications

1. Instrument indicateur pour véhicules automobiles, en particulier pour la pose dans le tableau de bord ou le combiné d'instruments, avec des graduations s'étendant sur sa périphérie, ainsi qu'avec un affichage indicateur (2) dans la partie centralé de l'instrument indicateur et un élément à aiguille, **caractérisé en ce que** l'élément à aiguille peut uniquement se déplacer, en tant que tronçon d'aiguille (11), dans la zone graduée (1) s'étendant sur la périphérie de manière telle qu'il ne se produit, pendant le fonctionnement de l'affichage indicateur (2), aucun chevauchement avec celui-ci, dans lequel, en désactivant une indication librement programmable sur l'affichage indicateur (2), le tronçon d'aiguille restant (12), ensemble avec l'élément rotatif (13) de l'aiguille, peut être automatiquement représenté de façon simulée sur l'affichage indicateur (2).

2. Instrument indicateur selon la revendication 1, **caractérisé en ce que** l'affichage indicateur (2) peut être programmé librement.

3. Instrument indicateur selon la revendication 1 ou 2, **caractérisé en ce que** l'instrument indicateur (10) est un instrument circulaire.

4. Instrument indicateur selon la revendication 3, **caractérisé en ce que** la zone graduée (1) s'étendant sur la périphérie est réalisée par un deuxième élément d'affichage ou segment d'affichage en forme de couronne.

5. Instrument indicateur selon la revendication 4, **caractérisé en ce que** non seulement les graduations, à la manière d'un instrument analogique, mais également le tronçon d'aiguille (11) respectif mobile sont simulés dans le deuxième segment d'affichage.

6. Instrument indicateur selon l'une quelconque des revendications précédentes, **caractérisé en ce que** la représentation sur l'affichage indicateur (2) peut s'opérer en couleurs.

7. Instrument indicateur selon l'une quelconque des revendications précédentes, **caractérisé en ce que** des données pertinentes pour le service conduite-exploitation telles que des signaux routiers actuels ou bien des données pertinentes pour le fonctionnement ou selon le cas pertinentes pour la vitesse peuvent être affichées sur l'affichage indicateur (2).
